(19) Europäisches Patentamt

European Patent Office

Office européen des brevets

(11) **EP 4 664 777 A1**

(12) **EUROPEAN PATENT APPLICATION**

(43) Date of publication:
**17.12.2025 Bulletin 2025/51**

(21) Application number: **25305136.1**

(22) Date of filing: **31.01.2025**

(51) International Patent Classification (IPC):
*H04B 5/48* (2024.01)    *H04B 1/04* (2006.01)
*H04B 7/06* (2006.01)

(52) Cooperative Patent Classification (CPC):
**H04B 5/48; H04B 1/0458; H04B 7/0608**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2024 EP 24305931**

(71) Applicant: **NXP B.V.**
**5656 AG Eindhoven (NL)**

(72) Inventors:
• **MERLIN, Erich**
**5656AE Eindhoven (NL)**

• **KURVATHODIL, Manoj**
**5656AE Eindhoven (NL)**
• **MOREAU, Olivier Claude**
**31023 Toulouse (FR)**
• **CARON, Claude**
**31023 Toulouse (FR)**
• **MAURICE, Eric**
**31023 Toulouse (FR)**
• **RAJ, Ayush**
**31023 Toulouse (FR)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **DUAL-ANTENNA COMMUNICATION DEVICE**

(57)    Dual-antenna communication devices and methods are disclosed. The device comprises:
a controller, having a first, output, interface, comprising a first connector and a second connector; a first antenna coupled between the first connector and a ground; and a second antenna, coupled between the first connector and the second connector; wherein the controller is configured to: transmit an output signal from the first antenna by providing a signal at the first connector and an in-phase copy of the signal at the second connector, and transmit the output signal from the second antenna by providing the signal at the first connector and an opposite-phase copy of the signal at the second connector.

*Fig. 1*

## Description

TECHNICAL FIELD

The present disclosure relates to a dual-antenna communication device. Moreover, the present disclosure relates to a method of operating a dual-antenna communication device. The present disclosure furthermore relates to a computer-implemented method.

BACKGROUND

It is known to control multiple antennas using a shared controller. For example, switches may be used to couple, in a first configuration, a first antenna to the shared controller and decouple a second antenna from the shared controller. The same or other switches may be used to, in a second configuration state, decouple the first antenna from the shared controller and couple the second antenna to the shared controller. Furthermore, the first antenna, and the second antenna may be coupled to the shared controller using a first matching circuit and a first filter, and a second matching circuit and a second filter respectively.

SUMMARY

According to a first aspect of the present disclosure, there is provided: a dual-antenna communication device, comprising: a controller, having a first, output, interface, comprising a first connector and a second connector; a first antenna coupled between the first connector and a ground; and a second antenna, coupled between the first connector and the second connector; wherein the controller is configured to: transmit an output signal from the first antenna by providing a signal at the first connector and an in-phase copy of the signal at the second connector, and transmit the output signal from the second antenna by providing the signal at the first connector and an opposite-phase copy of the signal at the second connector.

The device may further comprise a first matching network to adapt the first antenna to first interface of the controller.

The device may further comprise a second matching network to adapt the second antenna to the second interface of the controller.

The device may further comprise a third matching network to remove harmonics from the output signal.

The device may further comprise an RF sense path, between the first antenna and the controller, being configured for sensing an RF sense voltage on the first antenna.

In one or more embodiments the controller is configured to determine a receiver signal strength indication, RSSI, at a node coupled to of the second antenna and or signals of the first antenna are sensed.

In one or more embodiments the first antenna is a metal segment antenna. In other embodiments, it is a flexible printed circuit (FPC) antenna or a coil antenna. In general, the first antenna may be any antenna which suitable for near field communication (NFC).

In one or more embodiments the second antenna is coil antenna. In other embodiments, the second antenna may be a FPC antenna or any other suitable antenna for NFC.

In one or more embodiments, the dual-antenna communication device is an NFC, device, wherein the controller is an NFC controller. The NFC controller may form part of an NFC reader or an NFC card or tag.

According to an additional aspect of the present disclosure, there is provided a controller as described above, configured for use in a dual-antenna communication device in which a first antenna is coupled between the first connector and a ground; and a second antenna is coupled between the first connector and the second connector.

According to a second aspect of the present disclosure, there is provided a method of operating a dual-antenna communication device, the method comprising: measuring the RF sense voltage; measuring the RSSI at the node; in response to the RF sense voltage being greater than a first threshold: in response to the RSSI being greater than or equal to a second threshold, transmitting the output signal from the first antenna by providing the signal at the first connector and an in-phase copy of the signal at the second connector, and otherwise not transmitting the output signal; and in response to the RF sense voltage not being greater than the first threshold in response to the RSSI being greater than or equal to a third threshold, transmitting the output signal from the second antenna by providing the signal at the first connector and an opposite-phase copy of the signal at the second connector, and otherwise not transmitting the output signal.

In one or more embodiments method further comprises the method further comprises: in a receive mode, receiving an input signal from at least one of the first and second antenna, through first and second connectors of a second interface.

In one or more embodiments, the second threshold is larger than the third threshold. In other embodiments, the second threshold is smaller than the third threshold, and in yet other embodiments they are equal. In general, the relative size of the thresholds may be associated with the relative gains of the respective antennas.

In one or more embodiments method further comprises the controller is a near field communication, NFC, controller.

According to a third aspect of the present disclosure, there is provided computer-implemented method comprising executable instructions which, when executed by an arrangement (100) cause said dual-antenna communication device to carry out a as just described.

BRIEF DESCRIPTION OF DRAWINGS

The above discussion/summary is not intended to describe each embodiment or every implementation of the present disclosure; the drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. Therefore, the disclosure is not limited to the examples of embodiment.

All illustrations in the drawings are schematical. In different figures, similar or identical elements or features are provided with the same reference signs or reference signs that are different from the corresponding reference signs only within the first digit. To avoid unnecessary repetitions, elements or features that have already been elucidated concerning a previously described embodiment are not elucidated again at a later position in the description.

Various example embodiments may be more completely understood in consideration of the following detailed description in connection with the accompanying drawings in which:

FIG. 1 shows a dual-antenna communication device;
FIG. 2 shows in-phase signals;
FIG. 3 shows opposite-phase signals;
FIG. 4 shows a further dual-antenna communication device;
FIG. 5 shows a further dual-antenna communication device;
FIG. 6 shows a further dual-antenna communication device;
FIG. 7 shows a further dual-antenna communication device;
FIG. 8 shows a flow of a method of operating a dual-antenna communication device; and
FIG. 9 shows a flowchart of a method according to one or more embodiments.

While various embodiments discussed herein are amenable to modifications and alternative forms, aspects thereof have been shown by example in the drawings and will be described in detail. It should be understood, however, that the intention is not to limit the disclosure to the particular embodiments described. On the contrary, the purpose is to cover all modifications, equivalents, and alternatives falling within the scope of the disclosure, including aspects defined in the claims. In addition, the term "example" used throughout this application is only by way of illustration and not limitation.

DESCRIPTION OF EMBODIMENTS

The dual-antenna communication device of the present disclosure may enable the use of no switches and related controls (assigned general purpose Input/Outputs from NFC-Controller). Moreover, a transformer (balun) usage may be omitted. Further, a reduced bill of material (BOM) reduces PCB area, which, as a consequence, lowers costs.

Aspects of the present disclosure are believed to be applicable to various types of devices, apparatuses, systems, and methods. At the same time, not necessarily so limited, various aspects may be appreciated through the following discussion of nonlimiting examples that use exemplary contexts.

In the following description, various details are set forth to describe specific examples presented herein. However, it should be apparent to one skilled in the art that one or more other examples and/or variations of these examples may be practiced without all the specific details given below. In other instances, well-known features have not been described in detail so as not to obscure the description of the examples herein. For ease of illustration, the same reference signs may be used in different diagrams to refer to the same elements or additional instances of the same element. Also, although aspects and features may, in some cases, be described in individual figures, it will be appreciated that features from one figure or embodiment can be combined with features of another figure or embodiment even though the combination is not explicitly shown or explicitly described as a combination.

An aspect of the present disclosure can be seen in a switchless antenna selection (no switch and GPIOs available for other purposes). Consequently, enhanced performance results, e.g., higher transmission power efficiency and receiver sensitivity, which is an effect of no extra losses due to switches.

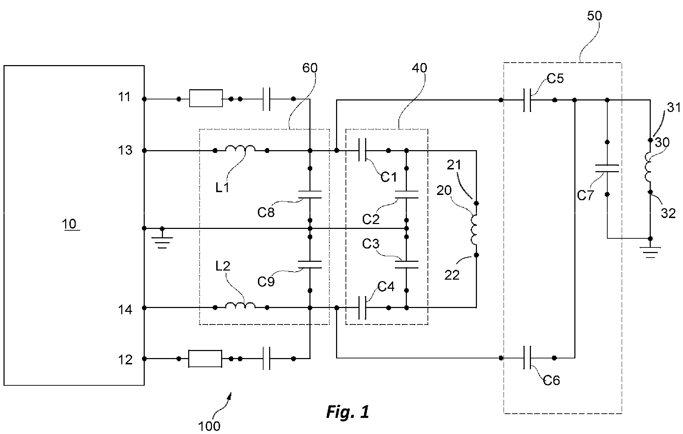

FIG. 1 shows a circuit diagram of at least part of a dual-antenna communication device 100 for transmitting and receiving wireless electromagnetic signals, which in particular may be suitable for use in near field communication. The Fig. shows a controller 10, which is functionally connected to both of two antennas 20 and 30, by two pairs of wires or connectors. The first pair of wires or connectors, shown at 11 and 12 in Fig.1, may be used in reception mode, and the second pair of wires or connectors, shown at 13 and 14, are used in transmission mode. The connectors 11 and 12, may be referred to hereinunder as a second interface, or RX interface, (for reception), and the connectors 13 and 14 may be referred to as a first interface, or TX interface, for transmission. In the transmission mode, a second antenna 20, which may also be referred to as a differential antenna, receives a signal from the first connector 13 of the first interface of the controller 10, at one of its terminals, shown as terminal 21 in FIG.1, and receives the signal from the connector 14 of the first interface of the controller 10 at the other of its terminals, shown as terminal 22 in Fig. 1. Thus, the voltage across the two terminals of the second antenna 20 is the difference between the signals of the two connectors 13, 14. A first antenna 30, which may also be referred to as a single-ended antenna, receives the signals of the two connectors 13, 14 at the same terminal side shown as terminal 31 in Fig. 1, the other terminal, shown as 32 being connected to GND so that the voltage across the terminals of the first antenna 30 is the sum of the two signals.

If the signals on connectors 13 and 14 are in phase, all power is mainly delivered to the first antenna 30, and no power, or essentially no power, is delivered to the second antenna 20. If the signals on connectors 13 and 14 are opposite-phase, all power is mainly delivered to the second antenna 20, and no power, or essentially no power, is delivered to the first antenna 30.

In this way, depending on the phase setting of the transmission signals either the second antenna 20 or the first antenna 30 is selected for transmitting and receiving, due to the fact that the first antenna 30 is single-ended and the second antenna 20 is a differential antenna. Hence, a communication process can be established through one of antennas 20, 30 via phase setting of the transmission signal, without a need for switches to route the signal.

In other words, in a transmission mode, to select the second antenna 20, controller 10 provides differential signals (opposite-phase signals) to connectors 13 and 14 of the first interface so that all electromagnetic energy is provided for the second antenna 20 and low electromagnetic energy, preferably no electromagnetic energy, to the first antenna 30.

Conversely, in order to select the first antenna 30, controller 10 provides in-phase signals to connectors 13, 14 of the first interface, which represent transmission connectors so that all power is directed to the first antenna 30 and no power, or substantially no power, to the second antenna 20.

Transmission signals provided in the above-illustrated way may optionally be pre-filtered by an EMC filter 60 with inductors L1, L2, and capacitors C8 and C9 (LC low-pass filters). By means of the EMC filter 60, frequency components that are not needed can then be removed. For example, when the transmitter is not generating a pure sinusoidal transmitter signal but a rectangular one, many harmonics are present in said transmitter signal, and the EMC filter 60 removes harmonics. As a result, a signal with a specified frequency (e.g. 13.56 MHz) is provided. Moreover, with a certain output power, said EMC filter 60 may be helpful in fulfilling regulatory requirements.

Each antenna 20 and 30 may be, as shown, functionally connected to a matching network 40 and 50, respectively, to adapt the first and second antenna 20 and 30 impedance to corresponding drivers (not shown) of the controller 10. Controller 10 may be, for instance, a near field communication, NFC, controller). In this context, a first matching network 40 comprising capacitors C1...C4 adapts the impedance of the second antenna 20 to said drivers of said controller 10, and a second matching network 50 having capacitors C5... C7 adapts the impedance of the first antenna 30 to said drivers of said controller 10. The signal at the respective antenna, which may be referred to as an output signal, may thus be modified, by the matching network or networks, in phase or amplitude relative to the corresponding pair of signals at the connectors 13 and 14.

In a reception mode, the first terminal 21 of the second antenna 20 is linked to the first connector 11 of the second interface. The other terminal 22 of the second antenna 20 is functionally connected to the second connector 12 of the second interface so that the electric pick-up voltage from the second antenna 20 is applied to the second interface to a receiver part (not shown) of the controller 10.

The signal received from the first antenna 30 is linked to both connectors 11, 12 of the second interface, which also implement receiver inputs.

Controller 10 is configured to measure either the difference of the two connectors 11, 12, which may also be referred to as RX inputs, of the second interface, RX = RX1 - RX2 or RX2 - RX1 in the case of a differential receiver using the second antenna 20, or, in the case of a single-ended receiver, only one of said connectors 11, 12 may be used, in conjunction with antenna 30 of Fig. 1 (or antenna 20, in other circuit configuration, which will be shown hereinbelow).

The skilled person will appreciate that the dual antenna arrangement may be operable in simultaneous transmission and reception modes: in particular, when the controller 10 is in a reader mode, it transmits, using transmitter circuitry TX, carrier signals that are modulated by a corresponding card, and the modulated signals are then read, at the same time, by receiver circuitry RX on the receive side. Conversely, when the controller 10 is in card mode, a signal received by the receiver circuitry RX may act to "wake up" the NFC, which then modulates the received signal, by transmitting a signal on a transmit interface TX, to provide a response, or answer to the reader.

As will be described in more detail hereinbelow, controller 10 measures a signal on connectors 11 and 12 of the second interface and processes the received signals at either connector 11 or connector 12, or either the sum or the difference of the signals on each of connectors 11 and 12. In this way, different receivers can be used to evaluate received signals.

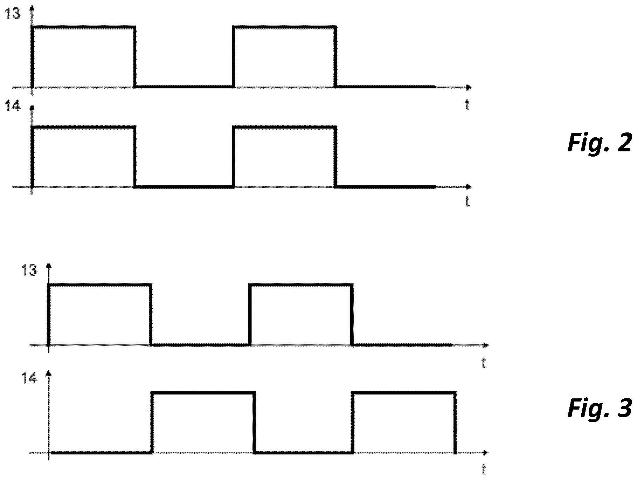

FIG. 2 shows a timing diagram with in-phase signals over time t. The above diagram shows a signal on connector 13 of the first interface, and the lower diagram shows a signal on connector 14 of the first interface. Because the signals on both connectors 13 and 14 of the first interface are in-phase signals, the voltage of the signals at first 21 and second 22 terminals of the second antenna 20 are equal (since in the general the matching circuit has an equivalent effect on both signals); the transmit power is thus essentially routed completely to the first antenna 30 and essentially not to the second antenna 20.

FIG. 3 shows a timing diagram with opposite-phase signals over time t. The above diagram shows a signal on output 13 of the first interface, and the lower diagram shows a signal on output 14 of the first interface. Because the signals on both connectors 13 and 14 of the first interface are opposite-phase signals, the transmit power is essentially routed completely to the second antenna 20 and essentially not to the first antenna 30.

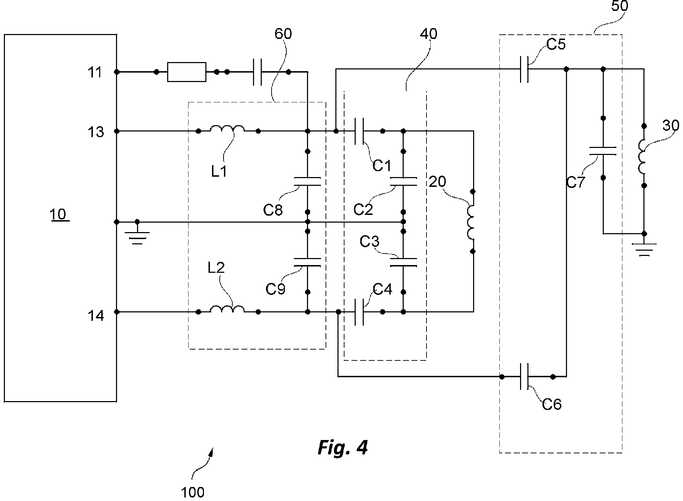

FIG. 4 shows an alternative dual-antenna communication device 100 suited to be operated with a single-ended receiver. In its transmission mode, the same applies as described in the context of the dual-antenna communication device 100 of FIG. 1. In its reception mode, one terminal of the second antenna 20 is functionally connected to only one connector 11 of the second interface. As shown in Fig. 4, a terminal of the second antenna 20 is functionally connected to the connector 11 of the first terminal, so that a part of the pick-up voltage from the second antenna 20 is applied on RX connector 11. The pick-up signals of the first antenna 30 are linked only to the same RX connector 11 of the second interface as the second antenna 20. Alternatively, the pick-up signal of the first antenna 30 could be linked only to the connector 12 of the second interface (not shown in figures).

The skilled person will appreciate that, whereas FIG. 1 shows an arrangement which can operate, in receive mode, as a differential receiver, in FIG. 4, the receiver is a single-ended receiver. Thus, whereas, in embodiments such as that shown in FIG. 1, the receiver has to alternatingly check the difference, and some, of the signals on connectors 11 and 12, in figure 4, the receiver can receive signals from both antenna, simultaneously, the signal from the second receive 30 being a full voltage part, and the signal from the first receiver 20 being the half voltage part.

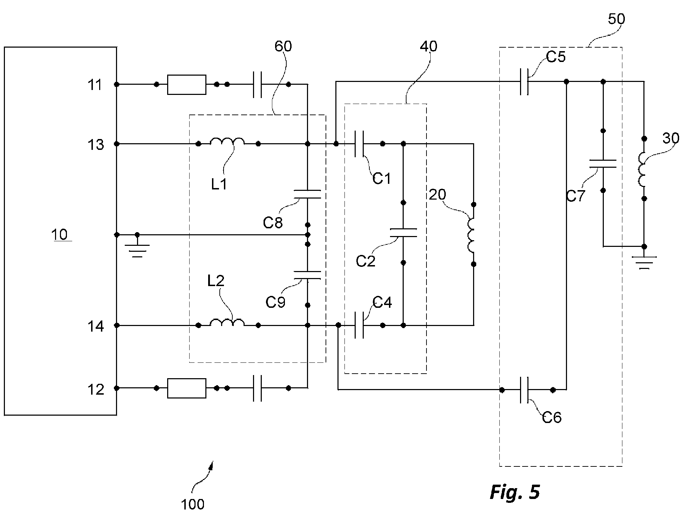

FIG. 5 shows a further alternative dual-antenna communication device 100. One recognizes a single capacitor C2 parallel to the differential second antenna 20. In other words, the two capacitors C2 and C3 of the second matching network 40 that are in parallel with the differential second antenna 20 (shown in FIG. 4) can be replaced by a single capacitor C2. Of course, the two alternatives shown in FIG.s. 4 and 5 can be combined. In this way, the second matching network 40 is configured to match the impedance of the second antenna 20 to the impedance that is needed for the first interface implemented as a TX interface.

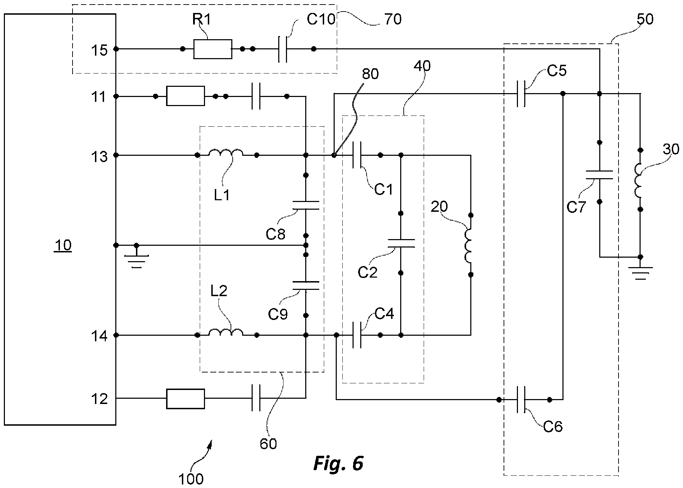

FIG. 6 shows a further alternative dual-antenna communication device 100. In this case, controller 10 can detect whether an external device (e.g. NFC device, 13.56 MHz reader, NFC charging device, etc.) is at communication distance on the first antenna 30, and when the second antenna 20 is used for charging accessories on multiple antenna solutions. The detection may be done without interrupting the action on the current active antenna, which may lead to time optimization. For example, if the second antenna 20 charges an accessory, detection from the first antenna 30 can be done without disturbing or interrupting the charging. Hence, there is no need to repeatedly switch antennas to check the presence of a device on the antennas 20 and 30. In this way, an effective method is provided to distinguish the presence of RF field at the first antenna 20, the second antenna 30, or both antennas 20 and 30.

In the transmission mode, the second antenna 20 receives the signal from connector 13 of the first interface at one of its terminals and the signal from connector 14 of the first interface at the other one, so that the voltage across the two terminals of the second antenna 20 is the difference of the two TX signals. The first antenna 30 receives the two TX signals at the same terminal side, the other terminal being connected to GND so that the voltage across the terminals of the first antenna 30 is the sum of the two TX signals. TX signals are optionally pre-filtered by a third matching network 60 (an LC low-pass filter with inductors L1, L2 and capacitors C8, C9). In this way, each antenna 20 and 30 has a matching network 40 and 50, respectively, to adapt the impedance of the antennas 20 and 30 to the corresponding drivers of the controller 10.

In the reception mode one terminal of the second antenna 20 is functionally connected to the connector 11 of the second interface and the other terminal of the second antenna 20 is functionally connected to the connector 12 of the second interface, so that the pick-up voltage from the second antenna 20 is applied between the connectors 11 and 12 of the receiver of the controller 10. The received signal from the first antenna 30 is functionally connected to both RX connectors 11 and 12.

In the arrangement of FIG. 6, one recognizes an RF-sense path 70 having a resistor R1 in series with a capacitor 10 functionally connected to a connector 15 of the controller 10. Alternatively, another filtering network not shown in the figures is conceivable for implementing the RF-sense path 70. The arrangement of FIG. 6 shows an example of implementation when the detection is made on the single-ended first antenna 30. Input signals on said connector 15 are evaluated with a specific threshold to decide which activity occurs on the first antenna 30.

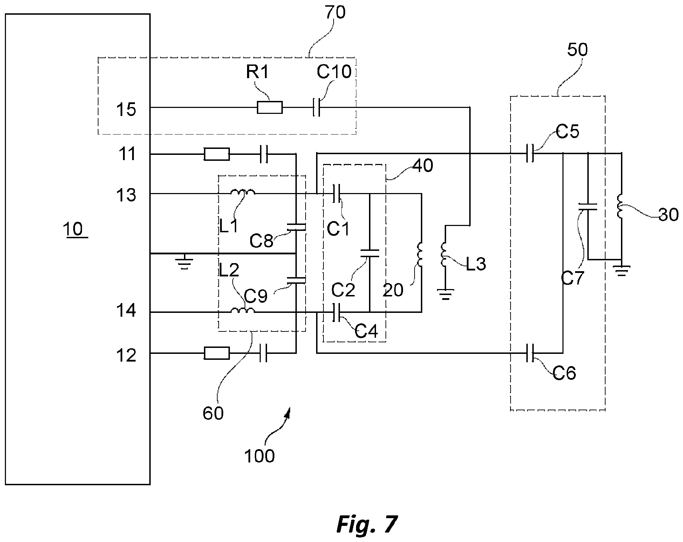

FIG. 7 shows a further alternative dual-antenna communication device 100. In this case, controller 10 can detect whether an external device is at communication distance on the differential second antenna 20 while the single-ended first antenna 30 can e.g. be used for charging accessories. By means of an inductor L3, which is magnetically coupled with the second antenna 20, an activity on the second antenna 20 can be recognized on the RF sense path 70, while at the same time a transmission activity occurs via the first antenna 30. This arrangement may be helpful if the single-ended first antenna 30 is the majority of the time in use and to connect the RF sense path 70 to the differential second antenna 20.

The arrangement of FIG.s. 6 and 7 may be useful with dual antenna solutions for which the antennas 20, 30 are used sequentially when controller 10 is used to charge an accessory (pen, earbuds, etc.) on one antenna. If an external communication device is within communication range of the other antenna, the receiver will not detect it, and the transaction will not occur. By means of the RF sense path 70, controller 10 can detect the external device. Consequently, controller 10 could interrupt the charging, switch to the other antenna, make the transaction, and then resume the charging on the previous antenna.

In some embodiments, the antennas 20 and 30 are selected sequentially, one after the other, during the polling loop. In order to select the second antenna 20, controller 10 provides differential signals to the connectors 13 and 14 of the first interface so that essentially all power is routed to the second antenna 20 and only very little, ideally none, to the first antenna 30. Controller 10 measures the difference between the two connectors 11 and 12, of the second interface that is, RX = RX1- RX2 or RX2-RX1 (differential receiver), or one RX side (single-ended receiver). As shown in FIG. 6, the RF sense path 70 is active on the first antenna 30.

In order to select the first antenna 30, controller 10 provides in-phase signals to the connectors 13 and 14 of the first interface so that all power is routed to the first antenna 30 and only very little, ideally none, to the second antenna 20. The Controller 10 measures both inputs 11 and 12 (single-ended receiver) and decodes either one of the connectors 11, 12 or the sum of both.

With this solution, simultaneous field detection on both antennas 20 and 30 may be possible, and the external field sense allows discrimination of which antenna is in the field. Any device using a loop antenna for power transfer and/or communications with more than two antennas has various use cases (NFC, A4WP, Qi charging, etc.).

An activity on any of antennas 20, 30 can be performed by means of a sensing of circumstances on the second interface of the controller 10.

The present disclosure proposes that a single controller 10 feeds only one antenna out of two antennas at a time by setting its transmitting signal phases (differential or in-phase signals). The proposed dual-antenna communication device 100 may be any device using NFC function with more than two antennas with various use cases.

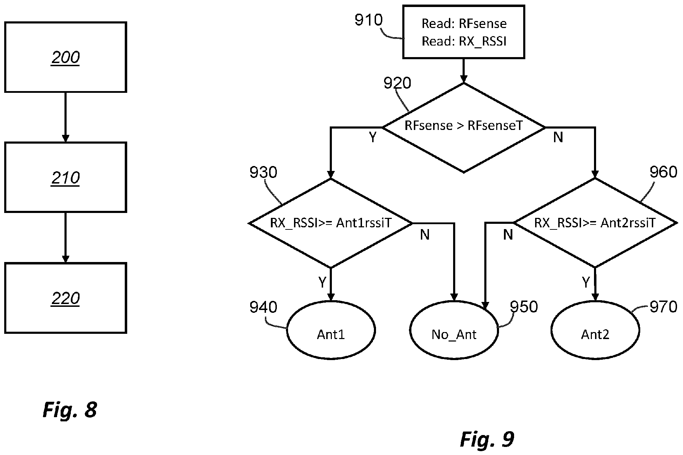

FIG. 8 shows a flow of a proposed method to operate a dual-antenna communication device 100.

In step 200 transmission signals are provided on connectors 13, 14 of a first interface of a controller 10 of the dual-antenna communication device 100.

In step 210 receiving signals are provided on connectors 11, 12 of a second interface of the controller 10 of the dual-antenna communication device 100.

In step 220 antennas 20, 30 being in functional connection with the connectors 11, 12, 13, 14 of the interfaces are selected depending on a phase setting of the signals on the connectors 11, 12, 13, 14 of the interfaces.

FIG. 9 shows a flow of a method according to one or more embodiments. In particular, the method illustrates one way for the controller 10 to determine which antenna should be used by transmitter circuitry, to provide for optimal transmission of the output signal. The method is particularly suitable for NFC transmissions. An RF sensing circuit (such as sense path 70 shown in Fig. 6), is used for signal sensing, using only the first antenna 30. A threshold value ("RFsenseT") may be set by the controller. Similarly, threshold values may be set for RSSI signals (Received Signal Strength Indicator) though each antenna: Ant1rssiT, for a threshold RSSI value for the second antenna 20, and Ant2rssiT, for a threshold RSSI value for the first antenna 30, respectively. Since the first and second antennas may be of different construction, or in different locations, or both, it will be appreciated that the RSSI values from the antennas may be different. Such a different may be indicative of which antenna is optimal, in any particular situation, for NFC transmissions. Of course, it may be that neither antenna is suitable for a particular intended transmission.

The above-mentioned thresholds may be used, together with an algorithm as will be described hereinbelow, to enable the controller 10 to determine which, if any, antenna should be used for a transmission., or, in other words, to determine if the signals on the second interface connectors 13 and 14 of the second interface (TX interface) should be provide in phase, or in antiphase (that is to say, opposite-phase).

In a first step 910, the strength of the RF signal (RFsense) is measured, using for instance, the sense path 70, along with a received signal strength indicator (RX_RSSI) value, measured from a point which is common to both antennas, such as node 80 shown in Fig. 6.

In a next step 920, the strength of the RF signal (RFsense) is compared with the threshold value (RFsenseT). If the condition that:

$$RFsense > RFsenseT,$$

is met then the left branch of the flowchart is followed. It will be recalled that RFsense is measured from only the first antenna (30 in FIG. 6). So if the value of this parameter exceeds the threshold value (RF sense Ti), then transmission will occur (if at all) from the first antenna ("Ant1").

In particular, if this condition is met, flow proceeds to step 930, at which the value of the received RSSI (RX_RSSI) is compared with the RSSI threshold for the first antenna ("Ant1rssiT), by determining whether condition is met that RX_RSSI is greater than or equal to Ant21rssiT:

$$RX\_RSSI >= Ant1rssiT.$$

If the condition is met, then the flow proceeds to step 940, at which the RF signal to be transmitted is applied to the first antenna ("Ant1"). As has been described above, the RF signal is applied to the first antenna by providing in-phase signals at connectors 13 and 14.

If the condition is not met, then the flow proceeds to 950 at which it is concluded that there is no available antenna which can make the transmission.

Returning to step 920, if the condition that:

$$RFsense > RFsenseT,$$

is not met then the right branch of the flowchart is followed. RFsense is measured from only the first antenna (30 in figure 6). So if the value of this parameter does not exceed the threshold value (RF sense Ti), then transmission should not occur from the first antenna, but will occur (if at all) from the second antenna ("Ant2").

Thus, if the condition is not met, the flow proceeds to step 960, at which the value of the received RSSI (RX_RSSI) is compared with the RSSI threshold for the second antenna ("Ant42rssiT), by determining whether condition is met that RX_RSSI is greater than or equal to Ant1rssiT:

$$RX\_RSSI >= Ant42rssiT.$$

If the condition is met, then the flow proceeds to step 970, at which the RF signal to be transmitted is applied to the second antenna ("Ant2"). As has been described above, the RF signal is applied to the second antenna by providing anti-phase, or opposite phase, signals at connectors 13 and 14.

If the condition is not met, then the flow proceeds, similar to the left hand branch, to 950 at which it is concluded that there is no available antenna which can make the transmission.

As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also, elements described in association with different embodiments may be combined. It should also be noted, that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code, or other formats for performing some of the steps. Any of the above may be embodied on a computer-readable medium, which may include storage devices and signals, in compressed or uncompressed form. As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and producing thereby a result in the form of information or signals (an output). Depending on the context, the term "computer" will mean either a processor in particular or more generally a processor in association with an assemblage of interrelated elements contained within a single case or housing.

It is noted that the embodiments above have been described with reference to different subject matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject matter also any combination of features relating to different subject-matters, in particular a combination of features of the method-type claims and features of the apparatus-type claims, is considered to be disclosed with this document.

Reference signs:

| | |
|---|---|
| 10 | controller |
| 11.. 14 | connector |
| 15 | input |
| 20 | 1st antenna |
| 21 | 1st antenna first terminal |
| 22 | 1st antenna second terminal |
| 30 | 2nd antenna |
| 31 | 2nd antenna first terminal |
| 32 | 2nd antenna second terminal |
| 40 | 1st matching network |
| 50 | 2nd matching network |
| 60 | 3rd matching network |
| 70 | RF sense path |
| 80 | common node |
| 100 | dual-antenna communication device |

200... 220     method steps
910... 970     method steps

**Claims**

1. A dual-antenna communication device (100), comprising:

   a controller (10), having a first, output, interface, comprising a first connector (13) and a second connector (14);
   a first antenna (30) coupled between the first connector (13) and a ground; and
   a second antenna (20), coupled between the first connector (13) and the second connector (14);
   wherein the controller (10) is configured to:

   transmit an output signal from the first antenna (30) by providing a signal at the first connector (13) and an in-phase copy of the signal at the second connector (14), and transmit the output signal from the second antenna (20) by providing the signal at the first connector (13) and an opposite-phase copy of the signal at the second connector (14).

2. The dual-antenna communication device (100) according to claim 1, further comprising a first matching network (40) to adapt the second antenna (20) to the first interface of the controller (10).

3. The dual-antenna communication device (100) according to claim 1 or 2, further comprising a second matching network (50) to adapt the first antenna (30) to the first interface of the controller (10).

4. The dual-antenna communication device (100) according to any of the preceding claims, further comprising a third matching network (60) to remove harmonics from the output signal.

5. The dual-antenna communication device (100), according to any of the preceding claims, further comprising an RF sense path (70), between the second antenna and the controller, for sensing an RF sense voltage on the first antenna (20).

6. The dual-antenna communication device (100) according to any of the preceding claims, wherein the controller is configured to determine a receiver signal strength indication, RSSI, at a node (80) coupled to the second antenna (30) and the first antenna (20).

7. The dual-antenna communication device (100) according to any of the preceding claims, wherein the first antenna is a metal segment antenna.

8. The dual-antenna communication device (100) according to any of the preceding claims, wherein at least one of the first and second antenna is a coil antenna.

9. The dual-antenna communication device, according to any of the preceding claims, being a near field communication, NFC, device, wherein the controller is an NFC controller.

10. A controller (10) as defined in any preceding claim, configured for use in a dual-antenna communication device in which a first antenna (30) is coupled between the first connector (13) and a ground; and a second antenna (20) is coupled between the first connector (13) and the second connector (14).

11. A method of operating a dual-antenna communication device (100) as claimed in claim 6 when dependent on claim 5, the method comprising:

    measuring the RF sense voltage;
    measuring the RSSI at the node;
    in response to the RF sense voltage being greater than a first threshold:
    in response to the RSSI being greater than or equal to a second threshold,

    transmitting the output signal from the first antenna (30) by providing the signal at the first connector (13) and an in-phase copy of the signal at the second connector (14),
    and otherwise not transmitting the output signal; and

    in response to the RF sense voltage not being greater than the first threshold
    in response to the RSSI being greater than or equal to a third threshold,

    transmitting the output signal from the second antenna (20) by providing the signal at the first connector (13) and an opposite-phase copy of the signal at the second connector (14),
    and otherwise not transmitting the output signal.

12. The method of claim 11, further comprising:
    in a receive mode, receiving an input signal from at least one of the first and second antenna, through first (11) and second connectors (12) of a second interface.

13. The method according to claim 12 comprising:
    operating the controller in the receive mode to measure the RF sense voltage.

**14.** The method of any of claims 11 to 13, wherein the controller is a near field communication, NFC, controller.

**15.** A computer-implemented method comprising executable instructions which, when executed by an arrangement (100) cause said dual-antenna communication device (100) to carry out the method of any of claims 9 to 13.

**Fig. 1**

*Fig. 2*

*Fig. 3*

**Fig. 4**

Fig. 5

Fig. 6

**Fig. 7**

200

210

220

**Fig. 8**

910 ── Read: RFsense
Read: RX_RSSI

920

RFsense > RFsenseT

Y   N

930

RX_RSSI>= Ant1rssiT   N

960

RX_RSSI>= Ant2rssiT

Y   N

940   Ant1

950   No_Ant

970   Ant2

**Fig. 9**

Europäisches
Patentamt
European
Patent Office
Office européen
des brevets

## EUROPEAN SEARCH REPORT

**Application Number**

EP 25 30 5136

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/394486 A1 (RIZZO PIERRE [US]) 17 December 2020 (2020-12-17) * paragraphs [0056], [0068], [0088], [0101], [0102] * * figure 6 * ----- | 1-15 | INV. H04B5/48 H04B1/04 H04B7/06 |

TECHNICAL FIELDS
SEARCHED (IPC)

H04B

The present search report has been drawn up for all claims

| Place of search | Date of completion of the search | Examiner |
|---|---|---|
| Munich | 3 June 2025 | Franz, Stefan |

## ANNEX TO THE EUROPEAN SEARCH REPORT
## ON EUROPEAN PATENT APPLICATION NO.

EP 25 30 5136

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | | Publication date |
|---|---|---|---|---|
| US 2020394486 A1 | 17-12-2020 | CN | 112086760 A | 15-12-2020 |
| | | CN | 212392383 U | 22-01-2021 |
| | | US | 2020394486 A1 | 17-12-2020 |

EPO FORM P0459

For more details about this annex : see Official Journal of the European Patent Office, No. 12/82